## Europäisches Patentamt
## European Patent Office
## Office européen des brevets

(19)

(11) Numéro de publication : **0 336 848 B1**

(12)

# FASCICULE DE BREVET EUROPEEN

(45) Date de publication du fascicule du brevet :
27.12.91 Bulletin 91/52

(51) Int. Cl.⁵ : **A01K 11/00**

(21) Numéro de dépôt : **89400959.6**

(22) Date de dépôt : **06.04.89**

(54) **Dispositif de marquage à poser sur l'oreille d'un animal.**

(30) Priorité : **07.04.88 FR 8804630**

(43) Date de publication de la demande :
**11.10.89 Bulletin 89/41**

(45) Mention de la délivrance du brevet :
**27.12.91 Bulletin 91/52**

(84) Etats contractants désignés :
**AT BE CH DE ES GB GR IT LI LU NL SE**

(56) Documents cités :
**EP-A- 0 002 619
DD-A- 252 532
DK-C- 30 618**

(73) Titulaire : **MAGRI HOLLAND B.V.
2 Eduard Van Beinumstrad
NL-1000 BV Amsterdam (NL)**

(72) Inventeur : **Porcher, Alain René
151, Avenue de Versailles
F-75016 Paris (FR)**
Inventeur : **Le Mélinaire, Hervé
La Rabine aux Fouteaux St. Germain sur Ille
F-35250 Saint Aubin d'Aubigne (FR)**

(74) Mandataire : **Clanet, Denis et al
Cabinet Beau de Loménie 55, rue
d'Amsterdam
F-75008 Paris (FR)**

## Description

Cette invention concerne un dispositif de marquage à poser sur l'oreille d'un animal.

Un moyen bien connu pour attacher un tel dispositif à un animal consiste à faire passer la tige terminée par une tête d'un élément mâle du dispositif à travers l'oreille et à travers une ouverture — derrière laquelle est bloquée la tête — d'un élément femelle du dispositif. L'élément mâle peut être fait d'une matière plastique pratiquement rigide, de sorte que la tige pourvue de la tête possède suffisamment de rigidité pour pouvoir être forcée à travers l'oreille. L'élément femelle peut être réalisé d'une matière semblable ou d'un plastique plus souple. Les deux éléments sont généralement séparés, mais on connaît aussi un dispositif en une seule pièce. Ce dispositif possède une forme allongée avec la tige à une extrémité et l'ouverture à l'autre. Lors de la pose, ce dispositif est placé en forme de boucle autour du bord de l'oreille, avec la tête de la tige d'un côté et l'ouverture de l'autre côté de l'oreille, si bien que la tête peut être forcée à travers l'oreille et être bloquée dans l'ouverture.

Il s'est avéré cependant qu'un tel dispositif présente certains inconvénients. Un inconvénient majeur est que le dispositif, lorsqu'il est posé en boucle autour du bord de l'oreille, ne suit pas intimement le profil de l'oreille mais forme au contraire un renflement saillant et est donc très exposé à un accrochage sur un obstacle, ce qui risque d'arracher le dispositif de l'oreille. Le renflement signifie aussi que les panneaux, sur lesquels sont marqués des signes d'identification, ne sont pas clairement visibles à une certaine distance.

Un autre inconvénient, se manifestant lorsque le dispositif est courbé en boucle à partir de sa forme initiale plate, est l'absence d'un effet de charnière défini, de sorte que des difficultés de manipulation du dispositif peuvent être rencontrées, soit pour aligner la tige terminée par la tête avec l'ouverture, soit pour charger le dispositif dans un outil pour la pose. Il est connu, pour supprimer ces difficultés, de prévoir une ou deux lignes transversales d'épaisseur réduite dans des dispositifs en plastique rigides, dans la zone où le dispositif contourne le bord de l'oreille, (voir, par exemple, EP-A-0002619). Bien que de telles lignes d'épaisseur réduite aient tendance à supprimer les inconvénients précités, les portions de section droite réduite ont tendance à être rompues au cas où le dispositif est accroché ou exposé à d'autres forces, avec le résultat que le dispositif est partagé en deux parties.

Les inconvénients décrits dans ce qui précède sont particulièrement manifestes si le dispositif est réalisé d'une matière plastique très souple et élastique. Le but de la présente invention est donc de procurer un dispositif ou boucle de marquage, formé de préférence d'une matière plastique souple et élastique, qui supprime un ou plusieurs des inconvénients précités.

Succinctement, l'objet de l'invention est un dispositif de marquage à poser sur l'oreille d'un animal, comprenant les caractéristiques décrites dans la revendication 1.

Le dispositif est formé de préférence d'une matière plastique souple et élastique, d'un polyuréthanne par exemple.

Le premier élément de liaison est de préférence nettement plus large que le second ou chaque second élément de liaison.

D'autres caractéristiques et avantages de l'invention ressortiront plus clairement de la description qui va suivre d'un mode de réalisation préféré mais nullement limitatif, ainsi que du dessin annexé, sur lequel :

— la figure 1 est une vue en élévation du dispositif à l'état de non-utilisation ou état déplié ;

— la figure 2 est une vue en plan prise dans le sens de la flèche A de la figure 1 ; et

— la figure 3 est une vue en élévation du dispositif à l'état fermé ou d'utilisation.

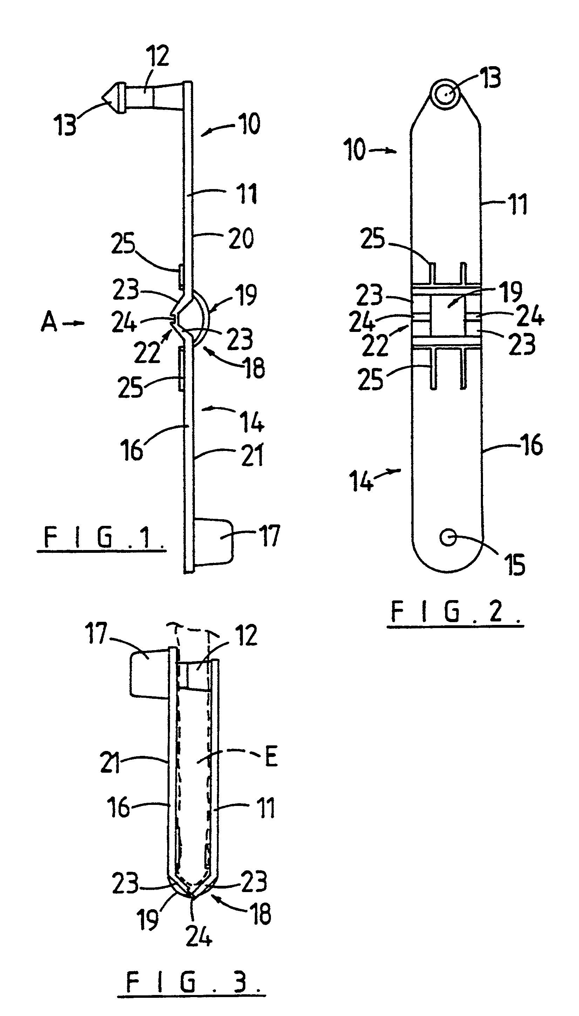

Le dispositif selon l'invention, notamment dans son mode de réalisation préféré, est formé d'une seule pièce d'une matière plastique telle que le polyuréthanne, lequel est bien connu pour être très souple et élastique, tout en étant capable de résister aux sollicitations climatiques et physiques auxquelles un dispositif de marquage est exposé pendant l'utilisation. Le dispositif ou boucle de marquage possède une forme allongée et se compose essentiellement d'une partie mâle 10, présentant un panneau 11 et une tige 12 avec une tête conique 13 à une extrémité, et une partie femelle 14 présentant une ouverture 15 à une extrémité d'un panneau 16. L'ouverture 15 est de préférence entourée d'un bossage ou paroi 17, dans lequel est logée la tête 13 (en partie ou en totalité) lorsque la boucle est fermée, comme représenté sur la figure 3. Dans sa forme préférée, la tige terminée par la tête possède la construction décrite dans le brevet français n° 7306851 au nom de Allflex International Limited.

Les panneaux 11 et 16 sont attachés l'un à l'autre, à leurs extrémités opposées à celles mentionnées ci-dessus, par une partie formant charnière 18, laquelle est d'un seul tenant avec les autres parties de la boucle. Cette charnière 18 est constituée d'un premier élément ou élément primaire de liaison 19 qui est situé au milieu (par rapport à l'axe longitudinal des panneaux 11 et 16 de forme allongée) et s'incurve vers l'extérieur, au-delà du plan défini par les surfaces 20 et 21 des panneaux, surfaces qui sont situées à l'extérieur après la pose de la boucle. L'élément de liaison primaire 19 est flanqué d'une paire d'éléments de liaison secondaires 22. Chacun de ces derniers est formé de deux languettes 23 dirigées l'une vers l'autre et faisant saillie vers l'extérieur, à partir des panneaux 11 et 16, dans une direction opposée à celle suivant laquelle s'incurve l'élément de liaison primaire 19. Les extrémités libres des languettes 23 sont reliées l'une à l'autre par une mince bande 24. Donc, à l'état déplié ou de non utilisation de la boucle (voir figure 1), l'élément de liaison primaire est courbé vers l'extérieur en une direction, par rapport aux panneaux, tandis que les languettes 23 font saillie en direction opposée, avec la bande 24 entre elles.

Diverses modifications de l'objet de l'invention sont possibles. Selon un mode de réalisation non préféré, la boucle peut comporter plus d'un élément de liaison primaire et un seul élément de liaison secondaire. Il est considéré cependant que l'on obtient un système de charnière plus défini en utilisant, comme dans le mode de réalisation préféré, deux éléments de liaison secondaires disposés de part et d'autre de l'élément de liaison primaire. L'élément primaire est de préférence beaucoup plus épais que les bandes 24.

La boucle peut être complétée par des nervures de raidissement 25 situées aux extrémités des panneaux 11 et 26 réunies par la charnière 18. Ces nervures peuvent être prévues pour empêcher toute tendance à la courbure transversale des panneaux dans la région de la charnière 18 après la pose de la boucle.

Comme on peut le voir sur la figure 3, la charnière 18 procure un effet d'articulation défini qui permet aux panneaux de s'appliquer pratiquement à plat contre les surfaces opposées correspondantes de l'oreille de l'animal, tout en formant une boucle qui épouse la forme du bord de l'oreille en le contournant. Cette action positive de la charnière découle des effets combinés des éléments de liaison primaire et secondaires qui, à l'état d'utilisation, prennent une position où ils s'étendent essentiellement suivant une même configuration courbe de transition entre les panneaux 11 et 16. Ainsi qu'on peut le voir sur la figure 3, les extrémités des languettes 23 se recouvrent légèrement, procurant ainsi une certaine protection des bandes 24 ; cependant, même si ces minces bandes devaient se déchirer, par suite d'un accrochage ou sous l'effet d'autres forces exercées sur la boucle, l'élément de liaison primaire restera intact, sauf dans des cas extrêmes, en raison de ses plus grandes largeur et épaisseur. Par conséquent, même si les bandes 24 devaient être sectionnées, l'élément de liaison primaire assure que les extrémités des panneaux restent attachées l'une à l'autre autour du bord de l'oreille de l'animal.

Bien que la construction de boucle selon l'invention ait été conçue en premier lieu pour une réalisation en matière souple et élastique, l'invention n'est pas limitée à une telle matière et est applicable aussi à des dispositifs de marquage formés d'une matière rigide ou ayant une faible souplesse.

## Revendications

1. Dispositif de marquage à poser sur l'oreille d'un animal, comprenant une partie mâle (10) dont fait saillie une tige (12) terminée par une tête (13), ainsi qu'une partie femelle (14) possédant une ouverture (15) qui peut être franchie par l'extrémité de tige portant la tête, après que cette extrémité à traversé l'oreille d'un animal, et dans laquelle elle est retenue, les parties mâle (10) et femelle (14) étant réunies par une partie formant charnière (18) qui est d'un seul tenant avec elles et qui comprend une paire d'éléments de charnière (22) écartés latéralement l'un de l'autre et comprenant chacun une mince bande transversale (24), de telle sorte que les parties mâle et femelle peuvent être déplacées autour de la charnière de manière à permettre à la tête de tige de venir franchir l'ouverture caractérisé en ce qu'il comprend en outre un élément de liaison (19) entre deux parties mâle (10) et femelle (14) qui, combiné avec les deux éléments de charnière (22) entre lesquels il est situé permet auxdites parties mâle et femelle de s'appliquer à plat contre les surfaces opposées correspondantes de l'oreille de l'animal tout en formant une boucle qui épouse la forme du bord de l'oreille en la contournant par l'extérieur.

2. Dispositif selon la revendication 1, caractérisé en ce que la tige (12) portant la tête (13) est prévue près d'une extrémité d'un panneau (11) de forme allongée et l'ouverture (15) est prévue près de l'extrémité d'un autre panneau (16) de forme allongée, la charnière (18) reliant les panneaux (11, 16) par leurs autres extrémités.

3. Dispositif selon la revendication 2, caractérisé en ce que le premier élément de liaison (19) forme une courbe dirigée vers l'extérieur entre les panneaux (11, 16) et le second ou chaque élément de charnière (22) est composé de deux languettes (23) attachées l'une à l'autre par une desdites minces bandes (24).

4. Dispositif selon la revendication 3, caractérisé en ce que les deux languettes (23) font saillie l'une vers l'autre et vers l'extérieur dans une direction contraire à celle de la courbe formée par l'élément de liaison (19).

5. Dispositif selon l'une des revendications 3 ou 4, caractérisé en ce que l'épaisseur de l'élément de liaison (19) est nettement supérieure à celle des bandes (24) reliant les languettes (23) des éléments de charnière.

6. Dispositif selon l'une quelconque des revendications précédentes, caractérisé en ce qu'il est formé d'une matière plastique très souple et élastique.

7. Dispositif selon la revendication 6, caractérisé en ce que la matière plastique est du polyuréthane.

8. Dispositif selon la revendication 2, caractérisé en ce qu'il comprend des nervures de raidissement (25) situées dans un panneau ou les deux (11, 16) au voisinage de la charnière (19).

## Patentansprüche

1. Markierungsvorrichtung für das Ohr eines Tieres mit einem Steckerteil (10) mit einer vorstehenden, durch einen Kopf (13) abgeschlossenen Stange (12) sowie einem Buchsenteil (14), mit einer Öffnung (15), die von dem den Kopf tragenden Ende der Stange durchdrungen werden kann, nachdem dieses Ende das Tierohr durchstochen hat und in dem das Ende festgehalten wird, wobei das Steckerteil (10) und das Buchsenteil (14) über ein ein Scharnier (18) bildendes Teil miteinander verbunden sind, das ein Paar seitlich voneinander beabstandeter Scharnierelemente (22) aufweist, die jeweils ein schmales Querband (24) aufweisen, derart, daß das Steckerteil und das Buchsenteil um das Scharnier herum verschwenkt werden können, um dem Kopf des Stabes den Eingriff in die Öffnung zu ermöglichen, **dadurch gekennzeichnet,** daß die Vorrichtung ferner ein Verbindungselement (19) aufweist, das die beiden Stecker- (10) bzw. Buchsenteile (14) miteinander verbindet und das so lang ist, daß en zusammen mit den beiden Scharnierelementen (22), zwischen denen es angeordnet ist, dem Steckerteil und dem Buchsenteil es ermöglicht, sich flach an die entsprechenden sich gegenüberliegenden Oberflächen des Tierohres anzulegen, unter Bildung einer Schleife, die die Form des Ohrrandes und dessen äußere Kontur annimmt.

2. Vorrichtung nach Anspruch 1, dadurch gekennzeichnet, daß die den Kopf (13) tragende Stange (14) nahe einem Ende eines länglichen Streifens (11) angeordnet ist und die Öffnung (15) nahe dem Ende eines anderen länglichen Streifens angeordnet ist, wobei das Scharnier (18) die beiden Streifen (11, 16) an deren anderen Enden verbindet.

3. Vorrichtung nach Anspruch 2, dadurch gekennzeichnet, daß das erste Verbindungselement (19) eine zwischen den Streifen (11, 16) nach außen gekrümmte Kurve bildet und das zweite bzw. jedes Scharnierelement (22) zwei miteinander über eines der schmalen Bänder (24) verbundene Zungen (23) aufweist.

4. Vorrichtung nach Anspruch 3, dadurch gekennzeichnet, daß die beiden Zungen (23) aufeinander zu und nach außen in einer Richtung vorspringen, die gegenüber der Richtung der durch das Verbindungselement (19) gebildeten Kurve entgegengesetzt ist.

5. Vorrichtung nach einem der Ansprüche 3 oder 4, dadurch gekennzeichnet, daß die Dicke des Verbindungselements (19) bedeutend größer ist als die der Bänder (24), die die Zungen (23) der Scharnierelemente verbinden.

6. Vorrichtung nach einem der vorstehenden Ansprüche, dadurch gekennzeichnet, daß sie aus einem sehr weichen und elastischen Kunststoff besteht.

7. Vorrichtung nach Anspruch 6, dadurch gekennzeichnet, daß der Kunststoff Polyurethan ist.

8. Vorrichtung nach Anspruch 2, dadurch gekennzeichnet, daß diese Versteifungsrippen (25) aufweist, die in einem oder den beiden Streifen (11, 16) in der Nähe des Scharniers (19) angeordnet sind.

## Claims

1. Marking device for placing on an animal's ear, comprising a male portion (10) from which projects a stem (12) ended by a head (13), as well as a female portion (14) having an opening (15) through which the end of the stem carrying the head can pass, once said end has cut through an animal's ear, and in which it is held, the male (10) and female (14) portions being coupled together by a hinge-forming portion (18) integral therewith and comprising a pair of hinge elements (22) that are laterally spaced apart, each hinge element including a thin transversal strip (24), in such a way that the male and female portions can be moved about the hinge to allow the stem head to pass through the opening, characterized in that it further comprises a coupling element (19) between two male (10) and female (14) portions which, being combined with the two hinge elements (22) between which it is situated, enables said male and female portions to rest flat against the corresponding opposite surfaces of the animal's ear while forming a loop which adopts the shape of the edge of the ear while rounding it on the outside.

2. Device according to claim 1, characterized in that the stem (12) carrying the head (13) is provided adjacent one end of an elongate panel (11) and the opening (15) is provided adjacent the end of another elongate panel (16), said panels (11, 16) being coupled together at their other ends by the hinge (18).

3. Device according to claim 2, characterized in that the first coupling element (19) bows outwardly between the panels (11, 16) and the second or each hinge element (22) is formed by two tongue pieces (23) which are joined together by one of the said thin strips (24).

4. Device according to claim 3, characterized in that the two tongue pieces (23) project toward one another and outwardly in a direction opposite to that in which the coupling element (19) bows.

5. Device according to one of claims 3 or 4, characterized in that the thickness of the coupling element (19) is substantially greater than the thickness of the strips (24) joining the tongue pieces (23) of the hinge elements.

6. Device according to any one of the preceding claims, characterized in that it is formed from a very flexible and resilient plastics material.

7. Device according to claim 6, characterized in that the plastics material is a polyurethane.

8. Device according to claim 2, characterized in that it comprises strengthening ribs (25) that are located in one or both panels (11, 16) adjacent the hinge (19).

F I G . 1 .

F I G . 2 .

F I G . 3 .